(19) Europäisches Patentamt
European Patent Office
Office européen des brevets

(11) Numéro de publication : **0 054 491**
**B1**

(12) **FASCICULE DE BREVET EUROPÉEN**

(45) Date de publication du fascicule du brevet : **03.04.85**

(51) Int. Cl.⁴ : **B 32 B 17/10**, C 03 C 27/12, C 08 G 18/10

(21) Numéro de dépôt : **81401990.7**

(22) Date de dépôt : **11.12.81**

# (54) Vitrage feuilleté de sécurité.

(30) Priorité : **11.12.80 FR 8026270**

(43) Date de publication de la demande : **23.06.82 Bulletin 82/25**

(45) Mention de la délivrance du brevet : **03.04.85 Bulletin 85/14**

(84) Etats contractants désignés : **AT BE CH DE FR GB IT LI LU NL SE**

(56) Documents cités :
**EP-A- 0 007 857**
**DE-A- 2 660 346**
**FR-A- 2 366 319**
**FR-A- 2 366 321**
**FR-A- 2 381 796**
**FR-A- 2 398 606**

(73) Titulaire : **SAINT-GOBAIN VITRAGE**
**Les Miroirs 18, avenue d'Alsace**
**F-92400 Courbevoie (FR)**

(72) Inventeur : **Bourelier, Claude**
**98, avenue Saint-Mandé**
**F-75012 Paris (FR)**
Inventeur : **Daude, Gérard**
**11, rue René Voisin**
**F-33140 Villeneuve D'Ornon (FR)**
Inventeur : **Orain, Roger**
**2, La Lisière du Golf Rue du Colonel de Rochebrune**
**F-92380 Garches (FR)**

(74) Mandataire : **Leconte, Jean-Gérard et al**
**Saint-Gobain Recherche 39, Quai Lucien Lefranc**
**F-93304 Aubervilliers Cedex (FR)**

**EP 0 054 491 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

**Description**

L'invention concerne les vitrages feuilletés composés d'un support rigide transparent en verre ou en matière plastique monolithique ou feuilleté sur lequel adhère une couche de matière plastique ayant des propriétés d'absorbeur d'énergie revêtue d'une couche molle améliorant la résistance à la rayure.

De tels vitrages feuilletés ont déjà été proposés. Dans la publication de brevet française 2 134 255, on décrit un vitrage feuilleté comprenant une feuille de verre, une couche d'une matière plastique ayant des propriétés d'absorbeur d'énergie, par exemple un polyvinylbutyral plastifié, un revêtement protecteur dur ou mou et notamment, dans ce dernier cas, à base de polyuréthane aliphatique.

On a constaté par la suite qu'un vitrage ayant le revêtement dur, mince, n'était pas satisfaisant. Si le revêtement mou montrait de meilleures propriétés bio-mécaniques, on s'est aperçu qu'après un temps pouvant varier de quelques jours à plusieurs mois il se produisait un décollement des éléments du feuilleté, notamment une perte des propriétés d'adhésion entre la couche intercalaire et le verre ainsi qu'une perte des qualités optiques avec formations de zones troubles, cette perte étant due essentiellement à une reprise d'humidité de la couche de polyvinylbutyral plastifié. C'est pourquoi, dans la publication de brevet française 2 134 119, il a été proposé de placer une couche formant barrière anti-vapeur entre la couche ayant les propriétés d'absorbeur d'énergie et la couche molle résistante à la rayure.

Selon un développement récent, on a proposé dans la publication de brevet française 2 398 606 d'utiliser un polyuréthane thermoplastique comme intercalaire ayant des propriétés d'absorbeur d'énergie dans un vitrage feuilleté. Dans ce cas le vitrage conserve ses qualités optiques et l'adhésion entre éléments reste bonne dans des conditions de température et d'humidité anormales mais les propriétés bio-mécaniques du vitrage et notamment la résistance à la rupture chute dans ces conditions anormales de température et d'humidité.

Dans un développement parallèle on a placé une feuille de verre entre la couche ayant les propriétés d'absorbeur d'énergie et une couche molle antilacérante et autocicatrisable.

On est ainsi arrivé à une structure de vitrage feuilleté ayant les propriétés désirées, qui est complexe puisqu'elle présente au moins 4 couches. En multipliant le nombre de couches, on a en parallèle multiplié les difficultés d'adhésion des différentes couches entre elles. Il s'ensuit que la méthode de fabrication de ces vitrages feuilletés, et notamment l'assemblage des éléments entre eux, est devenue compliquée et coûteuse.

L'invention propose des vitrages de sécurité résistant au choc dans une large gamme de température et d'humidité, évitant les lacérations dues aux éclats du vitrage en cas de rupture de celui-ci, résistant aux agents extérieurs, et ceci avec un nombre de couches limité.

Les vitrages feuilletés conformes à l'invention comprennent un support monolithique ou feuilleté, en verre ou en matière plastique, une couche intercalaire transparente de bonne qualité optique en une matière thermoplastique ayant des propriétés d'absorbeur d'énergie et une couche molle de revêtement en matière plastique résistante à la rayure et autocicatrisable, notamment en polyuréthane à réseau tridimensionnel désigné par la suite sous le nom de polyuréthane thermodurcissable, et sont caractérisés en ce que la couche intercalaire est à base d'une polyuréthane-polyurée présentant une structure moléculaire essentiellement linéaire et une teneur en groupes urée de l'ordre de 1 à 20 % en poids, la polyuréthane-polyurée étant formée à partir d'un composant polyol, d'un composant isocyanate, le rapport des groupes isocyanates NCO aux groupes hydroxyles OH étant supérieur à 1, et d'au moins une diamine susceptible de réagir avec les groupes isocyanates en excès n'ayant pas réagi avec les groupes hydroxyles, le poids moléculaire de la polyuréthane-polyurée étant supérieur à 10 000 et de préférence compris entre 20 000 et 200 000. Par couche autocicatrisable, on entend une couche de laquelle les impressions locales disparaissent spontanément après un court laps de temps, de l'ordre de quelques secondes à quelques minutes, cette vitesse de disparition étant fonction de la nature de l'impression et de la température de la matière plastique.

Sous un des aspects de l'invention, le vitrage est formé d'une seule feuille rigide de verre ou de matière plastique, recouverte de la couche de polyuréthane-polyurée transparente, elle même recouverte de la couche molle de matière plastique, notamment de polyuréthane thermodurcissable. Dans l'application au pare-brise de véhicules à moteur, la feuille de verre peut avoir une épaisseur de 1 à 5 mm environ, la couche de polyuréthane-polyurée une épaisseur d'environ 0,2 à 1 mm et généralement de l'ordre de 0,3 mm, la couche de polyuréthane thermodurcissable une épaisseur de 0,2 à 0,8 mm et généralement de l'ordre de 0,3 mm.

Un des avantages de cette structure de vitrage selon l'invention est qu'elle permet d'avoir des épaisseurs plus faibles pour la couche intercalaire absorbeuse d'énergie, que si cette même couche était disposée entre deux feuilles rigides en verre. En effet dans ce dernier cas, les éclats de verre résultant d'une rupture du vitrage peuvent couper la couche intercalaire lorsque celle-ci a des épaisseurs de quelques dixièmes de millimètres d'épaisseur seulement.

Sous un autre aspect de l'invention, pour les vitrages de sécurité antiballe, les vitrages selon l'invention peuvent comprendre un support feuilleté en verre ou en matière plastique recouvert des deux couches déjà mentionnées, à savoir la couche de polyuréthane-polyurée et la couche autocicatrisable.

La préparation de la polyuréthane-polyurée utilisée dans le cadre de l'invention peut s'effectuer par le procédé au prépolymère, c'est-à-dire par réaction d'un excès du composant isocyanate sur le composant polyol (par composant polyol on entend tous les composés hydroxylés intervenant dans la préparation), pour obtenir un prépolymère ayant des groupes isocyanates terminaux libres, sur lequel on fait réagir des agents d'allongement de chaine qui sont ici les diamines.

Les propriétés physiques et bio-mécaniques de la polyuréthane-polyurée peuvent être modifiées éventuellement par l'addition de réactifs mono- ou plurifonctionnels tels que des triols, des isocyanates tels des triisocyanates, des biurets d'isocyanates entraînant une réticulation partielle.

Les composants de départ sont choisis de sorte que l'on obtienne un poids molculaire supérieur à 10 000, et de préférence compris entre 20 000 et 200 000.

Les diisocyanates convenables entrant dans la composition des polyuréthane-polyurées sont notamment des isocyanates aliphatiques, cycloaliphatiques, aliphatiques-aromatiques non sensibles à la lumière ou encore des biurets d'isocyanate. On peut utiliser par exemple les isocyanates difonctionnels aliphatiques comme le 1,6-hexanediisocyanate, le 2,2,4-triméthyl-1,6-hexanediisocyanate, le 2,4,4-triméthyl-1,6-hexanediisocyanate, le 1,3-bis (isocyanatométhyl)benzène, le bis (4-isocyanatocyclohexyl)méthane, le bis (3-méthyl-4-isocyanatocyclohexyl)méthane, le 2,2-bis (4-isocyanatocyclohexyl) propane et le 3-isocyanatométhyl-3,5,5-triméthylcyclohexylisocyanate, le 1,4-butanediisocyanate, le 1,2-hexane-diisocyanate, le 1,12-dodécanediisocyanate, le 1,3-cyclobutanediisocyanate, le 1,3-cyclohexane-diisocyanate, le 1,4-cyclohexanediisocyanate, ou des mélanges de ces isocyanates.

Le composant polyol peut être formé à partir de polyétherdiols ou de polyesterdiols, polythioétherdiols, polyacétaldiols, polyesteramidediols, de masse moléculaire comprise entre 300 et 4 000, des polycaprolactones de masse moléculaire comprise entre 500 et 2 000, des polybutadiènes à fonction hydroxyle ou carboxyle, seuls ou en mélange, des diols courts de masse moléculaire comprise entre 50 et 300, et des agents réticulants tels des alcools de fonctionalité supérieure ou égale à 3, de masse moléculaire comprise entre 800 et 3 000, ou des amines de fonctionalité supérieure ou égale à 3, de masse moléculaire comprise entre 200 et 1 000.

On utilise par exemple des polyols obtenus par réactions d'alcools polyfonctionnels sur des diacides aliphatiques ou des éthers cycliques. Les alcools polyfonctionnels sont par exemple le 1,2-éthanediol(éthylèneglycol), le 1,2-propanediol, le 1,3-propanediol, le 1,2-butanediol, le 1,4-butanediol, le 2,2-diméthyl-1,3-propanediol (néopentylglycol), le 1,6-hexanediol, le 2-méthyl-2,4-pentanediol, le 3-méthyl-2,4-pentanediol, le 2-éthyl-1,3-hexanediol, le 2,2,4-triméthyl-1,3-pentanediol, le diéthylèneglycol, le triéthylèneglycol, les polyéthylèneglycols, le dipropylèneglycol, le tripropylèneglycol, les polypropylèneglycols ou le 2,2-bis (hydroxyméthyl)-1-1-propanol (triméthyloléthane), le 1,2,4-butanetriol, le 1,2,6-hexanetriol, le 2,2-bis (hydroxyméthyl)-1,3-propanediol (pentaérythritol) et le 1,2,3,4,5,6-hexanehexol (sorbitol), le cyclohexanediméthanol.

Les diacides aliphatiques sont par exemple les acides malonique, maléique, fumarique, succinique, adipique, subérique, azélaïque, sébacique, phtalique, isophtalique, les anhydrides phtalique, tétrahydrophtalique, hexahydrophtalique, tétrachlorophtalique, endométhylènetétrahydrophtalique, glutarique et maléique.

Des dihydroxypolyesters particulièrement convenables sont également les dihydroxypolycarbonates connus, pouvant par exemple être obtenus par réaction de diols comme le 1,3-propanediol, le 1,4-butanediol, et/ou le 1,6-hexanediol, le 3-méthylpentanediol-1,5, le diéthylèneglycol, le triéthylèneglycol, ou le tétraéthylène glycol sur des carbonates de diaryle, par exemple le carbonate de diphényle, ou le phosgène.

Des dihydroxypolyéthers convenables sont de même les composés connus de ce type, que l'on prépare par exemple par polymérisation d'époxydes comme l'oxyde d'éthylène, l'oxyde de propylène, l'oxyde de butylène, le tétrahydrofurane, l'oxyde de styrène ou l'épichlorhydrine sur eux-mêmes, par exemple en présence de $BF_3$, ou par addition de ces époxydes, éventullement en mélange ou l'un après l'autre, sur des composants de départ présentant des atomes d'hydrogène réactifs comme l'eau, des alcools ou des amines par exemple les : 1,2-éthanediol, 1,3-propanediol ou 2,2'-bis (4-hydroxyphényl) propane et aniline.

Des agents d'allongement de chaîne convenables du type diamine sont de préférence les diamines aliphatiques, cycloaliphatiques, ou mixtes, aliphatique-cycloaliphatiques, présentant des groupes amino primaires, de poids moléculaire 60-300. Des exemples non limitatifs de tels composés sont les suivants : éthylène diamine, tétraméthylène diamine, hexaméthylène diamine, 4,4'-diaminodicyclohexylméthane, 1,4-diaminocyclohexane, 4,4'-diamino-3,3'-diméthyldicyclohexylméthane ou 1-amino-3,3,5-triméthyl-5-aminométhylcyclohexane (isophoronediamine). On préfère tout particulièrement le 4,4'-diaminodicyclohexylméthane ou l'isophorone diamine.

Afin d'améliorer ou de régler certaines propriétés de la polyuréthane-polyurée obtenue, on peut ajouter à la composition divers additifs. Ainsi pour augmenter l'adhésion, on peut utiliser des promoteurs d'adhésion tels le trialkoxysilanes à radical alkoxy de 1 à 4 atomes de carbone comme le glycidyloxypropyltriméthoxysilane, le γ-aminopropyltriméthoxysilane, le 3,4-époxycyclohexyléthyltriméthoxysilane, l'aminoéthyltriméthoxysilane et des composés à groupes carboxy latéraux, que l'on peut faire entrer dans la composition du composant polyol. On peut utiliser ainsi des acides carboxyliques de formule

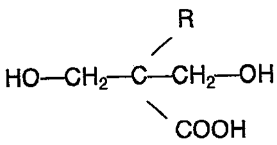 dans laquelle R représente un atome d'hydrogène ou un radical alkyle en $C_1$-$C_4$.

On peut citer par exemple l'acide diméthylolacétique, l'acide α,α-diméthylolpropionique, l'acide α,α-diméthylol-n valérique. L'utilisation d'un composant polyol comprenant de tels acides est décrit par exemple dans la publication de brevet française 2 366 321.

On peut ajouter des agents d'uniformisation ou encore appelés agent d'étalement, tels les huiles de silicone, les solutions de résine urée-formaldéhyde, les résines phénoliques et les esters cellulosiques, des agents poissants tels les résines de polyester issues de l'acide phtalique, des agents stabilisants à la lumière ultraviolette tels les benzophénones, les salicyclates, les cyanoacrylates et les benzotriazoles.

A la polyuréthane-polyurée obtenue après réaction des différents composants, on peut éventuellement ajouter des isocyanates plurifonctionnels tels les triisocyanates ou les biurets d'isocyanate. Cet ajout de même que celui d'un promoteur d'adhésion peut s'effectuer lors de la mise en solution de la polyuréthane-polyurée pour l'obtention d'une couche par coulée. Cet ajout peut encore s'effectuer directement dans l'extrudeuse au moment de l'extrusion. Cette addition d'isocyanate en combinaison éventuellement avec celle d'un promoteur d'adhésion comme un alkoxysilane, et le cas échéant avec celle d'un agent d'étalement conduit à un produit feuilleté final dont les bonnes qualités optiques sont conservées même après mise du produit dans des conditions extérieures très dures comme par exemple deux heures dans de l'eau bouillante.

Le poids moléculaire des polyuréthane-polyurées utilisées dans les vitrages feuilletés selon l'invention doit être supérieur à 10 000, de préférence entre 20 000 et 200 000, comme établi ci-dessus.

La couche molle autocicatrisable résistante à la rayure en matière plastique thermodurcissable est par exemple celle décrite dans les publications de brevets françaises 2 187 719 et 2 251 608 ; cette couche autocicatrisable a dans les conditions normales de température, une haute capacité de déformation élastique, un faible module d'élasticité (inférieur à 2 000 daN/cm$^2$ et de préférence inférieur à 1 200 daN/cm$^2$) et un allongement à la rupture de plus de 60 % avec moins de 2 % de déformation plastique et de préférence un allongement à la rupture de plus de 100 % avec moins de 1 % de déformation plastique. Les couches préférées de ce type sont des polyuréthanes thermodurcissables ayant un module d'élasticité d'environ 25 à 200 daN/cm$^2$ et un allongement d'environ 100 à 200 % avec moins de 1 % de déformation plastique.

Des exemples de monomères qui conviennent pour la préparation de ces polyuréthanes thermodurcissables sont d'une part les isocyanates difonctionnels aliphatiques comme le 1,6-hexanediisocyanate, le 2,2,4-triméthyl-1,6-hexane diisocyanate, le 2,4,4-triméthyl-1,6-hexane diisocyanate, le 1,3-bis(isocyanatométhyl)benzène, le bis (4-isocyanatocyclohexyl)méthane, le bis (3-méthyl-4-isocyanatocyclohexyl)méthane, le 2,2-bis (4-isocyanatocyclohexyl)propane et le 3-isocyanatométhyl-3,5,5-triméthylcyclohexylisocyanate, ainsi que les biurets, isocyanurates et prépolymères de ces composés ayant une fonctionalité de 3 ou davantage et d'autre part les polyols polyfonctionnels, comme les polyols ramifiés tels que les polyesterpolyols et polyétherpolyols obtenus par réaction d'alcools polyfonctionnels, notamment le 1,2,3-propanetriol (glycérol), le 2,2-bis (hydroxyméthyl)-1-propanol (triméthyloléthane), le 2,2-bis (hydroxyméthyl)-1-butanol (triméthylolpropane), le 1,2,4-butane-triol, le 1,2,6-hexane-triol, le 2,2-bis (hydroxyméthyl)-1,3-propane-diol (pentaérythritol) et le 1,2,3,4,5,6-hexane-hexol (sorbitol), avec des diacides aliphatiques comme l'acide malonique, l'acide succinique, l'acide glutarique, l'acide adipique, l'acide subérique et l'acide sébacique ou avec des éthers cycliques, comme l'oxyde d'éthylène, l'oxyde de 1,2-propylène et le tétrahydrofurane.

Le poids moléculaire des polyols ramifiés est avantageusement d'environ 250 à 4 000 et de préférence d'environ 450 à 2 000. Des mélanges de différents polyisocyanates et polyols monomères peuvent être utilisés. Un polyuréthane thermodurcissable particulièrement préféré est celui décrit dans la publication de brevet française 2 251 608.

La préparation des polyuréthanes-polyurées peut être réalisée comme indiqué dans la publication de brevet française 2 366 321 déjà citée.

Les prépolymères à groupes NCO sont en général préparés à une température réactionnelle d'environ 80-150 °C. L'achèvement de la réaction est observé par titrage des groupes NCO. Après la formation du prépolymère, on effectue l'allongement de chaîne par l'agent d'allongement de chaîne (diamine) soit à l'état fondu, soit en solution. La réaction d'allongement de chaîne peut également être mise en œuvre de manière particulièrement avantageuse dans des extrudeuses chauffées. En général, on maintient durant l'allongement de chaîne une température de 120 à 300 °C, de préférence de 150 à 250 °C.

La couche adhésive peut être formée in situ sur l'un des éléments à assembler, c'est-à-dire soit le support rigide monolithe ou feuilleté, soit la couche molle de matière plastique thermodurcissable autocicatrisable. Cette couche peut encore être formée sur un support auquel elle n'adhère pas fortement pour former une feuille que l'on détache dudit support et pour que l'on intercale ensuite entre les éléments à assembler.

La couche adhésive peut être extrudée, ou bien coulée en une ou plusieurs fois à partir d'une solution ou dispersion à base de liquides organiques ou de l'eau.

On peut fabriquer une feuille à deux couches de la façon suivante.

On fabrique tout d'abord une première couche qui peut être soit la couche adhésive, soit la couche de matière plastique autocicatrisable formée notamment d'un polyuréthane thermodurcissable. Et sur cette première couche, on forme la deuxième couche.

On peut ainsi fabriquer tout d'abord une couche de polyuréthane thermodurcissable par coulée du mélange des composants sur un support de coulée. Après polymérisation des monomères et formation d'une couche thermodurcissable d'épaisseur pouvant varier entre 0,2 et 0,8 mm, on coule une solution ou dispersion contenant la polyuréthane-polyurée et on évapore les solvants. On répète éventuellement plusieurs fois cette coulée pour obtenir une épaisseur convenable. On sépare la feuille du support de coulée. Cette feuille peut être manipulée et stockée aisément.

On peut également extruder la couche de polyuréthane-polyurée sur la couche molle thermodurcissable.

On peut encore procéder d'une façon inverse, c'est-à-dire en formant d'abord la couche de polyuréthane-polyurée.

Pour fabriquer le vitrage feuilleté, on en assemble les éléments par utilisation de la pression, par exemple par pinçage entre les rouleaux d'une calandreuse, et par action de la chaleur.

Il est possible d'améliorer la liaison des éléments ultérieurement en soumettant le vitrage feuilleté à un cycle d'autoclave, par exemple une heure à une température d'environ 100 à 140 °C et sous une pression d'environ 3 à 15 bars.

Des exemples de fabrication de vitrages feuilletés utilisant une couche intercalaire en polyuréthane-polyurée selon l'invention sont décrits par la suite.

## Exemple 1

On prépare une polyuréthane-polyurée de la façon suivante :

Dans un récipient on agite durant 12 heures, à 60 °C, sous azote, 70 kg (31,2 moles) d'un polyadipate de 1,4-butanediol, présentant des groupes OH terminaux, de poids moléculaire moyen voisin de 2 200, et de 34,7 kg (156,3 moles) de l'isocyanato-3-isocyanatométhyl-3,3,5-triméthylcyclohexane (diisocyanate d'isophorone) (IPDI). On ajoute ensuite 7,5 kg (83,3 moles) de 1,4-butanediol et 1,4 kg (10,45 moles) d'acide diméthylolpropionique, et on agite encore durant 2 heures à 100 °C. On trouve ensuite une teneur en groupes NCO libres de 2,2 %.

Par des conduits séparés, on introduit en continu 600 g par seconde (0,313 mole) du prépolymère NCO obtenu précédemment et 26,6 g/s (0,313 mole) d'isophoronediamine (IPDA), dans la trémie d'alimentation d'une extrudeuse chauffée, à double vis. Le rapport de la longueur au diamètre des vis est d'environ 40.

Les températures du produit fondu s'échelonnent le long des vis de 120 à 200 °C. Le produit fondu est refroidi brutalement dans un bain d'eau, puis débarrassé de l'eau adhérente à l'air comprimé avant d'être granulé. Il se présente sous forme d'une résine incolore, présentant la transparence du verre. La teneur en groupes —NH—CO—NH— est de 2,46 % en poids.

On prépare un polyuréthane thermodurcissable à partir des monomères ci-après qu'on dégaze d'abord par agitation sous pression réduite en vue d'éviter la formation de bulles dans la couche qui sera élaborée :

(1) 1 000 g d'un polyéther d'un poids moléculaire d'environ 450 obtenu par condensation d'oxyde de 1,2-propylène avec du 2,2-bis (hydroxyméthyl)-1-butanol et ayant une teneur en radicaux hydroxyle libres d'environ 10,5 à 12 %.

(B) 1 000 g d'un biuret de 1,6-hexanediisocyanate ayant une teneur en radicaux isocyanate libres d'environ 21 à 24 %.

Avant mélange des monomères, on incorpore d'abord au monomère (A) 23 g d'un antioxydant, à savoir du 2,6-di(t-butyl)-4-méthylphénol et 0,5 g d'un catalyseur, à savoir du dilaurate de dibutylétain.

On coule le mélange homogène de monomères ci-dessus sur un support en verre revêtu d'un agent de séparation antiadhésif. L'agent de séparation peut être, par exemple, un produit d'addition modifié d'éthylène oxyde répondant à la formule générale :

$$R_1—X—(C_2H_4O)_n—R_2$$

dans laquelle

$R_1$ représente un reste alkyle contenant de 8 à 18 atomes de carbone ou un reste alkyl-aryle contenant de 6 à 12 atomes de carbone dans la chaîne latérale,

$R_2$ représente un des groupements suivants :

$SO_3M$
$PO_3M_2$
$CO—CH(SO_3M)—CH_2COOM$
$CO—C_6H_4—COOM$

M étant un métal alcalin

X représente l'un des groupements suivants :

O, NH, CO—O ou CO—NH

et n représente un nombre entier compris entre 1 et 100.

On polymérise les monomères sous l'effet de la chaleur pour obtenir une couche de polyuréthane thermodurcissable solide d'environ 0,3 mm d'épaisseur ayant des propriétés d'autocicatrisation.

On extrude ensuite à l'aide d'une extrudeuse à deux vis les granulés de la polyuréthane-polyurée obtenue précédemment. L'extrusion se fait à une température de masse d'environ 200 °C.

On forme à l'aide d'une buse à fente large une feuille de 0,3 mm d'épaisseur environ que l'on applique directement alors qu'elle est encore à une température élevée, de l'ordre de 180° sur la feuille de polyuréthane thermodurcissable préparée précédemment. L'assemblage des deux feuilles s'effectue par passage entre des rouleaux, le rouleau au contact de la feuille de polyuréthane-polyurée est refroidi et le cas échéant il présente une surface à structure pour donner une surface grainée à la couche de la polyuréthane-polyurée.

Après refroidissement, la feuille à deux couches peut être enroulée après qu'une des deux couches a été recouverte d'une feuille de protection, en polyéthylène par exemple, puis stockée.

Pour fabriquer le vitrage on assemble la feuille à deux couches avec le support en verre ou en matière plastique, monolithique ou feuilleté. Cet assemblage comme mentionné précédemment peut s'effectuer en deux étapes, une première étape consistant en un assemblage préliminaire obtenu par passage des éléments entre deux rouleaux d'une calandreuse, et une seconde étape consistant en une mise du produit feuilleté dans un autoclave où pendant une heure environ il subit une pression d'environ 10 bars à une température d'environ 135 °C.

On fabrique ainsi des échantillons d'un format de 30 cm × 30 cm consistant en une plaque de verre de 2,5 mm d'épaisseur, une couche de polyuréthane-polyurée de 0,3 mm d'épaisseur et une couche de polyuréthane thermodurcissable résistant à la rayure de 0,3 mm d'épaisseur. Ces échantillons seront testés comme indiqués ultérieurement.

Exemple 2

On procède de la façon décrite dans l'exemple 1 sauf que l'on ne fabrique pas au préalable une feuille à deux couches. Dans cet exemple, les 3 éléments constitutifs du vitrage feuilleté après découpe éventuelle, sont assemblés simultanément en une opération unique de calandrage suivie le cas échéant d'un cycle d'autoclave.

Exemple 3

On procède de la façon décrite dans l'exemple 1 sauf que l'on n'élabore pas au préalable une feuille à deux couches. Pour fabriquer le feuilleté, on opère de la façon suivante :

On fabrique un assemblage préliminaire de la feuille de verre et de la couche de polyuréthane-polyurée. Pour se faire on utilise par exemple le procédé connu en soi consistant à placer au moment de l'assemblage sur la face de la couche de polyuréthane-polyurée opposée à la face au contact du support, une forme, par exemple une feuille de verre munie d'un agent de séparation, feuille que l'on retire par la suite, on assemble ensuite le feuilleté à deux couches obtenu avec la feuille de polyuréthane thermodurcissable, par calandrage suivi éventuellement d'un cycle d'autoclave.

Exemple 4

On prépare une solution de la résine de polyuréthane-polyurée obtenue selon l'exemple 1, par mise en solution de cette résine à l'aide d'un mélange de trois solvants pris en quantités égales, à savoir une part de tétrahydrofurane pour une part de xylène et une part de méthyléthylcétone. A la solution contenant 10 % en poids de résine, on ajoute 2 % en poids d'un agent d'étalement formé d'une solution à 1 % en poids d'une huile de silicone dans le xylol, puis 0,2 % d'un promoteur d'adhésion, à savoir du glycidoxypropyltriméthoxysilane, et 0,5 % en poids d'un triisocyanate, à savoir un biuret de 1,6-hexanediisocyanate ayant une teneur en radicaux isocyanates libres d'environ 21 à 24 %.

La solution obtenue est coulée sur la couche de polyuréthane thermodurcissable obtenue selon le procédé décrit dans l'exemple 1. Plusieurs coulées successives avec évaporation des solvants entre chaque coulée sont généralement nécessaires pour avoir une couche de 0,3 mm d'épaisseur environ.

On obtient une feuille à deux couches que l'on assemble avec un support en verre comme dans l'exemple 1.

Exemple 5

On prépare une polyuréthane-polyurée de la façon suivante :

153 g (0,09 mole) d'un polyester d'acide adipique, d'hexanediol-1,6 et de néopentylglycol, d'indice

OH 65,9, sont déshydratés durant 30 min à 120 °C sous le vide de la trompe à eau. Ensuite, on ajoute au produit fondu 1,34 C (0,01 mole) d'acide diméthylolpropionique, et, après un mélange convenable, 66,6 g (0,3 mole) de diisocyanate d'isophorone (IPDI) et on agite l'ensemble durant 3 heures à 90 °C sous azote. On trouve une teneur en groupes NCO libres de 7,84 %.

Au prépolymère, on ajoute ensuite 600 g de chlorure de méthylène. On laisse la charge sous agitation et sous azote à la température ambiante, aux fins de refroidissement, et l'on ajoute goutte à goutte en 30 min, une solution de 34 g (0,2 mole) d'isophoronediamine (IPDA) dans 320 parties de chlorure de méthylène et 80 parties de méthanol.

On obtient une solution transparente et incolore. La teneur du produit sec en groupes —NH—CO—NH— est de 9,1 %, de même que dans l'exemple 4 la solution obtenue est coulée sur la couche de polyuréthane thermodurcissable, et la feuille à deux couches obtenue est assemblée avec un support en verre.

## Exemple 6

A la solution obtenue dans l'exemple 5, on ajoute 2 % en poids d'un agent d'étalement formé d'une solution à 1 % en poids d'une huile de silicone dans le xylol, puis 0,2 % de glycidoxypropyltriméthoxysilane et 0,5 % en poids d'un biuret de 1,6-hexanediisocyanate ayant une teneur en radicaux isocyanates libres d'environ 21 à 24 %.

De même que dans les exemples 4 et 5, la solution obtenue est coulée sur la couche de polyuréthane thermodurcissable, et la feuille à deux couches obtenue est assemblée avec un support en verre.

## Exemple 7

On prépare une solution d'une polyuréthane-polyurée de la façon suivante : 200 g (0,1 mole) d'un polyester d'acide adipique et d'éthylèneglycol sont déshydratés durant 30 min à 120 °C sous le vide de la trompe à eau. On ajoute ensuite en une fois 44,4 g (0,2 mole) de IPDI ; le mélange est agité durant 30 min à 120 °C sous azote. Le prépolymère obtenu à un indice NCO de 3,28 %.

Au prépolymère, on ajoute ensuite 600 g de toluène. On laisse la charge refroidir sous agitation et sous azote à la température ambiante, et on ajoute goutte à goutte en 30 min une solution de 17 g (0,1 mole) de IPDA dans 370 g de toluène et 410 g d'isopropanol.

La teneur des matières sèches en groupes —NH—CO—NH— est de 4,44 %.

A la solution obtenue, on ajoute un agent d'étalement, un silane et un triisocyanate comme décrit dans l'exemple 6.

On coule la solution résultante sur la couche de polyuréthane thermodurcissable et on assemble la feuille à deux couches obtenue avec un support en verre.

## Exemple 8

On prépare une solution d'une polyuréthane-polyurée de la façon suivante :

170 g (0,1 mole) du polyester de l'exemple 5 sont déshydratés durant 30 min à 120 °C sous le vide de la trompe à eau. On ajoute ensuite en une fois 44,4 g (0,2 mole) de IPDI ; le mélange est agité durant 30 min à 120 °C sous azote. Le prépolymère obtenu à un indice NCO de 3,98 %.

Au prépolymère, on ajoute ensuite 600 g de toluène. On laisse la charge refroidir à la température ambiante sous agitation et sous azote, et l'on ajoute goutte à goutte, en 30 min, une solution de 17 g (0,1 mole) d'IPDA dans 210 g de toluène et 340 g d'isopropanol.

La teneur des matières sèches en groupes —NH—CO—NH— est de 5,01 %.

A la solution obtenue, on ajoute un agent d'étalement, un silane et un triisocyanate comme décrit dans l'exemple 6.

On coule la solution résultante sur la couche de polyuréthane thermodurcissable et on assemble la feuille à deux couches obtenues avec un support en verre.

Les vitrages feuilletés fabriqués selon les exemples 1 à 8 présentent tous la qualité optique nécessaire à une utilisation en tant que vitrages automobile. Cette qualité optique se conserve dans la plupart des cas, même dans des conditions très dures d'humidité et de température. L'ajout le cas échéant du biuret d'isocyanate et de l'alkoxysilane améliore encore la tenue des vitrages feuilletés au test de l'eau bouillante. Ainsi le vitrage feuilleté de l'exemple 5 présente des bulles après avoir été immergé durant 2 heures dans de l'eau bouillante alors que le vitrage feuilleté de l'exemple 6 en est totalement exempt.

La résistance des échantillons à la chute de billes varie peu avec la température. Le graphique figure 1 compare la variation de cette résistance à celle d'un vitrage feuilleté classique formé de deux feuilles de verre de 3 mm d'épaisseur et d'une couche intercalaire en polyvinylbutyral de 0,76 mm d'épaisseur.

La température est indiquée en abscisse alors que la hauteur de chute de bille en mètres est indiquée en ordonnée. Les courbes indiquent les valeurs à partir desquelles les vitrages feuilletés sont traversés. Les courbes en traits pleins représentent la résistance au choc de vitrages conformes à l'invention, la courbe I étant relative à un vitrage ayant une couche de polyuréthane-polyurée de 0,3 mm d'épaisseur, la

courbe II étant relative à un vitrage ayant une couche de polyuréthane-polyurée de 0,6 mm d'épaisseur. La courbe en pointillés représente la résistance aux chocs du vitrage feuilleté classique.

On remarque que les résistances aux chocs à une température voisine de 20 °C sont pratiquement équivalentes pour des vitrages ayant une couche intercalaire de même épaisseur.

Par contre, alors que la résistance aux chocs chute véritablement à basse et à haute températures dans le cas du feuilleté classique, elle garde des valeurs très correctes, dans les mêmes conditions, dans le cas des feuilletés selon l'invention ; ce qui permet entre autre d'utiliser des couches intercalaires plus faibles que dans le cas d'un feuilleté classique.

Des mesures des adhésions de la couche intercalaire avec le support de verre ou en matière plastique rigide tel le polycarbonate, le polyméthacrylate de méthyle d'une part, et la couche résistante à la rayure en polyuréthane thermodurcissable d'autre part, montrent que ces adhésions sont bonnes et qu'elles se conservent dans le temps et dans des conditions de température et d'humidité très variables.

## Revendications

1. Vitrage feuilleté comprenant un support monolithique ou feuilleté, en verre ou en matière plastique, une couche intercalaire transparente de bonne qualité optique en une matière thermoplastique ayant des propriétés d'absorbeur d'énergie et une couche de revêtement en matière plastique résistante à la rayure et autocicatrisable, notamment en polyuréthane thermodurcissable, caractérisé en ce que la couche intercalaire est à base d'une polyuréthane-polyurée présentant une structure moléculaire essentiellement linéaire et une teneur en groupes urée de l'ordre de 1 à 20 % en poids, la polyuréthane-polyurée étant formée à partir d'un composant polyol, d'un composant isocyanate, le rapport des groupes isocyanates NCO aux groupes hydroxyles OH étant supérieur à 1, et d'au moins une diamine susceptible de réagir avec les groupes isocyanates en excès n'ayant pas réagi avec les groupes hydroxyles, le poids moléculaire de la polyuréthane-polyurée étant supérieur à 10 000 et de préférence compris entre 20 000 et 200 000.

2. Vitrage feuilleté selon la revendication 1, caractérisé en ce que la polyuréthane-polyurée est le produit réactionnel d'un prépolymère, issu d'un composant polyol et d'un composant isocyanate pris en excès, avec au moins une diamine.

3. Vitrage feuilleté selon une des revendications 1 ou 2, caractérisé en ce que la couche de la polyuréthane-polyurée contient au moins un promoteur d'adhésion choisi parmi les trialkoxysilanes et des composés à groupes carboxy latéraux.

4. Vitrage feuilleté selon la revendication 3, caractérisé en ce que le promoteur d'adhésion est choisi parmi les acides dihydroxycarboxyliques de formule :

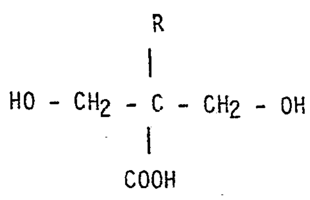

dans laquelle R représente un atome d'hydrogène ou un radical alkyle en $C_1$-$C_4$.

5. Vitrage feuilleté selon l'une des revendications 1 à 4, caractérisé en ce que les composants de la polyuréthane-polyurée comprennent des composés de fonctionnalité supérieure à 2, tels les triols, les triisocyanates ou les biurets d'isocyanates qui provoquent une réticulation partielle de la polyuréthane-polyurée, celle-ci conservant son caractère thermoplastique.

6. Vitrage feuilleté selon une des revendications 1 à 5, caractérisé en ce que la couche de la polyuréthane-polyurée contient au moins un triisocyanate tel un biuret d'isocyanate.

7. Vitrage feuilleté selon une des revendications 1 à 6, caractérisé en ce que la couche de la polyuréthane-polyurée contient au moins un agent d'uniformisation.

8. Vitrage feuilleté selon la revendication 1 caractérisé en ce que le support est une feuille de verre, la couche de la polyuréthane-polyurée a une épaisseur d'environ 0,2 à 1 mm et de préférence d'environ 0,3 mm et que la couche de revêtement autocicatrisable a une épaisseur d'environ 0,2 à 0,8 mm et de préférence d'environ 0,3 mm.

9. Feuille en matières plastiques utilisée dans la fabrication de vitrages feuilletés se composant d'une couche transparente de bonne qualité optique en une matière thermoplastique ayant des propriétés d'absorbeur d'énergie et d'une couche en une matière plastique résistante à la rayure et autocicatrisable, notamment en polyuréthane thermodurcissable, caractérisée en ce que la couche en matière thermoplastique ayant des propriétés d'absorbeur d'énergie est à base de la polyuréthane-polyurée de la revendication 1.

**Claims**

1. A laminated pane comprising a monolithic or laminated support, of glass or plastics material, a transparent intermediate layer of good optical quality of thermoplastic material having properties of energy absorption, and a covering layer of self-healing plastics material which is resistant to scratching, characterised in that the intermediate layer is based on a polyurethane-polyurea having an essentially linear molecular structure and a content of urea groups of the order of 1 to 20 % by weight, the polyurethane-polyurea being formed from a polyol component, an isocyanate component, the ratio of isocyanate NCO groups to hydroxyl OH groups being greater than 1, and at least one diamine capable of reacting with the excess isocyanate groups which have not reacted with the hydroxyl groups, the molecular weight of the polyurethane-polyurea being greater than 10,000 and preferably from 20,000 to 200,000.

2. Laminated pane according to claim 1, characterised in that the polyurethane-polyurea is the reaction product of a prepolymer obtained from a polyol component and an isocyanate component present in excess, with at least one diamine.

3. Laminated pane according to one of claims 1 and 2, characterised in that the polyurethane-polyurea layer contains at least one adhesion promoter selected from trialkoxy silanes and compounds having side-chain carboxy groups.

4. Laminated pane according to claim 3, characterised in that the adhesion promoter is selected from dihydroxycarboxylic acids of formula :

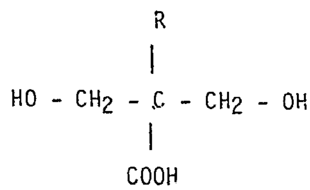

in which R is a hydrogen atom or a $C_1$-$C_4$ alkyl radical.

5. Laminated pane according to one of claims 1 to 4, characterised in that the components of the polyurethane-polyurea comprise compounds of functionality greater than 2, such as triols, tri-isocyanates or isocyanate biurets which cause partial cross-linking of the polyurethane-polyurea, the latter retaining its thermoplastic characteristics.

6. Laminated pane according to one of claims 1 to 5, characterised in that the polyurethane-polyurea layer contains at least one tri-isocyanate such as an isocyanate biuret.

7. Laminated pane according to one of claims 1 to 6, characterised in that the polyurethane-polyurea contains at least one spreading agent.

8. Laminated pane according to claim 1, characterised in that the support comprises a glass sheet, the polyurethane-polyurea layer has a thickness of about 0.2 to 1 mm and preferably 0.3 mm, and the self-healing coating layer has a thickness of about 0.2 to 0.8 mm and preferably about 0.3 mm.

9. A sheet of plastics materials used in manufacture of laminated panes comprising a transparent layer of good optical quality of a thermoplastics material having properties of absorption of energy and a layer of a self-healing plastics material resistant to scratching, such as a thermohardening polyurethane, characterised in that the layer of thermoplastics material having properties of energy absorption is based on the polyurethane-polyurea of claim 1.

**Ansprüche**

1. Verbundglasscheibe, bestehend aus einem monolithischen oder geschichteten Träger aus Glas oder Kunststoff, einer transparenten Zwischenschicht von guter optischer Qualität aus einem thermoplastischen Material mit energieabsorbierenden Eigenschaften und aus einer Deckschicht aus einem gegen Kratzer widerstandsfähigen und selbstheilenden Kunststoff, insbesondere aus thermisch vernetzbarem Polyurethan, dadurch gekennzeichnet, daß die Zwischenschicht auf der Grundlage eines Polyurethan-Polyharnstoffs mit im wesentlichen linearer Molekularstruktur aufgebaut ist und einen Gehalt an Harnstoffgruppen in der Größenordnung von 1 bis 20 Gew.-% aufweist, wobei der Polyurethan-Polyharnstoff aus einer Polyol-Komponente und einer Isocyanat-Komponente mit einem Verhältnis der Isocyanatgruppen NCO zu den Hydroxylgruppen OH größer als 1, und aus wenigstens einem Diamin gebildet ist, das mit den überschüssigen, nicht mit den Hydroxylgruppen umgesetzten Isocyanatgruppen zu reagieren vermag, wobei das Molekulargewicht des Polyurethan-Polyharnstoffs über 10 000 und vorzugsweise zwischen 20 000 und 200 000 liegt.

2. Verbundglasscheibe nach Anspruch 1, dadurch gekennzeichnet, daß der Polyurethan-Polyharnstoff das Reaktionsprodukt eines Präpolymerisats aus einer Polyol-Komponente und einer im Überschuß vorliegenden Isocyanat-Komponente mit wenigstens einem Diamin ist.

3. Verbundglasscheibe nach einem der Ansprüche 1 oder 2, dadurch gekennzeichnet, daß die Polyurethan-Polyharnstoff-Schicht wenigstens einen Haftverbesserer ausgewählt aus den Trialkoxysilanen und den Verbindungen mit Carboxy-Seitengruppen enthält.

4. Verbundglasscheibe nach Anspruch 3, dadurch gekennzeichnet, daß der Haftverbesserer aus den Dihydroxycarbonsäuren der Formel

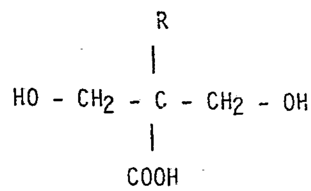

wobei R ein Wasserstoffatom oder eine Alkylgruppe mit 1 bis 4 Kohlenstoffatomen darstellt, ausgewählt ist.

5. Verbundglasscheibe nach einem der Ansprüche 1 bis 4, dadurch gekennzeichnet, daß die Zusammensetzungen des Polyurethan-Polyharnstoffs Verbindungen mit einer Funktionalität von größer als 2 enthalten, wie Triole, die Triisocyanate oder die Biurete von Isocyanaten, die eine partielle Vernetzung des Polyurethan-Polyharnstoffs hervorrufen, der seine thermoplastische Eigenschaft beibehält.

6. Verbundglasscheibe nach einem der Ansprüche 1 bis 5, dadurch gekennzeichnet, daß die Polyurethan-Polyharnstoff-Schicht wenigstens ein Triisocyanat, wie ein Biuret des Isocyanats, enthält.

7. Verbundglasscheibe nach einem der Ansprüche 1 bis 6, dadurch gekennzeichnet, daß die Polyurethan-Polyharnstoff-Schicht wenigstens ein Verlaufsmittel enthält.

8. Verbundglasscheibe nach Anspruch 1, dadurch gekennzeichnet, daß der Träger eine Glasscheibe ist, die Schicht aus Polyurethan-Polyharnstoff eine Dicke von ca. 0,2 bis 1 mm und vorzugsweise von ca. 0,3 mm und die selbstheilende Deckschicht eine Dicke von ca. 0,2 bis 0,8 mm, vorzugsweise 0,3 mm aufweisen.

9. Kunststoffolie zur Verwendung bei der Herstellung von Verbundglasscheiben, bestehend aus einer durchsichtigen Schicht hoher optischer Qualität aus einem thermoplastischen Kunststoffmaterial mit energieabsorbierenden Eigenschaften und einer Schicht aus einem gegen Kratzer widerstandsfähigen und selbstheilenden Kunststoff, insbesondere aus einem thermovernetzbaren Polyurethan, dadurch gekennzeichnet, daß die thermoplastische Kunststoffschicht mit energieabsorptionseigenschaften aus einem Material auf der Basis von Polyurethan-Polyharnstoff nach Anspruch 1 besteht.

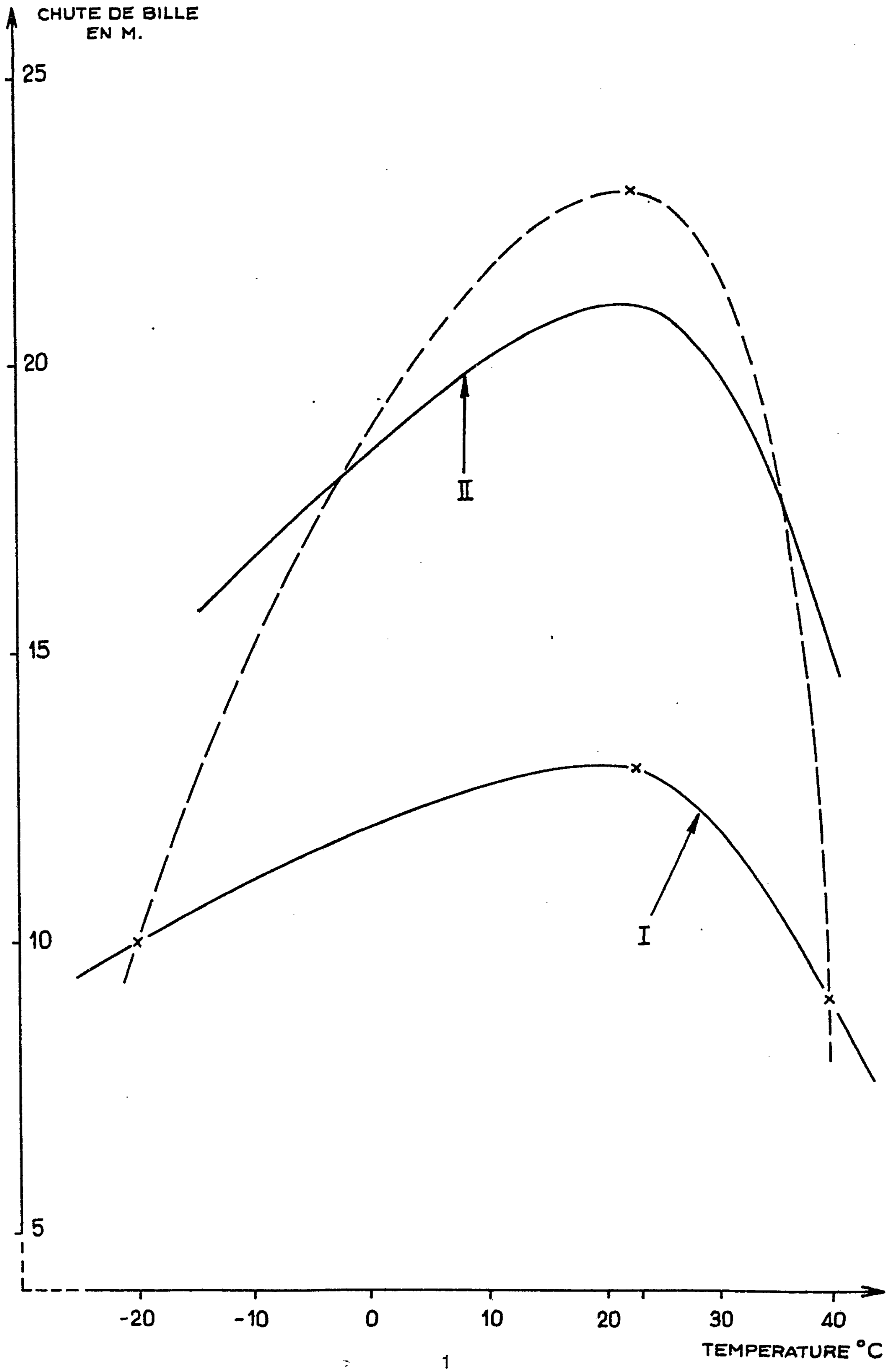
CHUTE DE BILLE
EN M.
25
20
15
10
5
II
I
-20
-10
0
10
20
30
40
TEMPERATURE °C